# EUROPÄISCHE PATENTSCHRIFT

(11) **EP 2 688 768 B1**
(45) Veröffentlichungstag und Bekanntmachung des Hinweises auf die Patenterteilung: **11.01.2017**
(21) Anmeldenummer: 12701353.0
(22) Anmeldetag: 27.01.2012
(51) Int. Cl.: B60Q 1/52, B62D 15/02, G08G 1/16, G06K 9/00, G08G 1/0962

(54) **FAHRERASSISTENZSYSTEM UND FAHRERASSISTENZVERFAHREN FÜR EIN FAHRZEUG**
DRIVER ASSISTANCE SYSTEM AND DRIVER ASSISTANCE METHOD FOR A VEHICLE
SYSTÈME D'ASSISTANCE AU CONDUCTEUR ET PROCÉDÉ D'ASSISTANCE AU CONDUCTEUR POUR UN VÉHICULE

(30) Priorität: 24.03.2011 DE 102011006054
(43) Veröffentlichungstag der Anmeldung: 29.01.2014
(73) Patentinhaber: Robert Bosch GmbH, 70442 Stuttgart (DE)
(72) Erfinder: NIEM, Wolfgang, 31141 Hildesheim (DE)
(86) Internationale Anmeldenummer: PCT/EP2012/051289
(87) Internationale Veröffentlichungsnummer: WO 2012/126650

(56) Entgegenhaltungen:
- WO-A1-2011/007484
- DE-A1-102008 011 228
- JP-A- 2007 026 321
- US-A1- 2007 091 173
- US-A1- 2010 014 713
- US-A1- 2010 014 714

## Beschreibung

Die Erfindung betrifft ein Fahrerassistenzsystem und ein Fahrerassistenzverfahren für ein Fahrzeug. Die Erfindung betrifft ferner ein Fahrzeug mit einem Fahrerassistenzsystem.

### Stand der Technik

Fahrerassistenzsysteme, welche einem Fahrer mittels eines akustischen Warnsignals signalisieren, wenn sein Fahrzeug eine Fahrspur verlässt, sind bekannt.

Nachteilig an den bekannten Systemen ist insbesondere, dass der Fahrer allein aufgrund des akustischen Warnsignals nicht unmittelbar erkennen kann, in welchem Umfang sein Fahrzeug bereits die Fahrspur verlassen hat.

Die Offenlegungsschrift US 2010/014714 A1 zeigt ein System zum Anzeigen von Fahrbahnmarkierungen auf einem Bildschirm.

Die Offenlegungsschrift US 2010/014713 A1 zeigt ein Verfahren zum Detektieren von Fahrbahnbegrenzungen, wobei die detektierten Fahrbahnbegrenzungen dann angezeigt werden.

Die Offenlegungsschrift WO 2011/007484 A1 zeigt eine Vorrichtung zum Detektieren und Anzeigen von Fahrbahnmarkierungen. Ferner kann eine Fahrzeugposition relativ zu den Fahrbahnmarkierungen angezeigt werden.

Die Offenlegungsschrift JP 2007 026321 A zeigt ein Annäherungsdetektionssystem für ein Fahrzeug, das eine Annäherung eines weiteren Fahrzeugs von hinten an das Fahrzeug detektieren kann, wobei das weitere Fahrzeug auf einer benachbarten Fahrspur fährt.

Die Offenlegungsschrift US 2007/091173 A1 ist als nächstliegender Stand der Technik zu sehen und zeigt ein Fahrbahnüberwachungssystem, wobei eine vorwärts und eine rückwärts schauende Kamera vorgesehen sind. Basierend auf den Bildern dieser Kameras wird eine Fahrzeugposition relativ zu Fahrbahnmarkierungen berechnet.

Die Offenlegungsschrift DE 10 2008 011 228 A1 zeigt ein Verfahren zur Unterstützung eines Nutzers eines Fahrzeugs.

### Offenbarung der Erfindung

Die der Erfindung zugrunde liegende Aufgabe kann daher darin gesehen werden, ein Fahrerassistenzsystem für ein Fahrzeug bereitzustellen, welches die bekannte Nachteile überwindet und einem Fahrer unmittelbar und einfach darüber in Kenntnis setzen kann, in welchem Umfang sein Fahrzeug bereits eine Fahrspur verlassen hat.

Die der Erfindung zugrunde liegende Aufgabe kann auch darin gesehen werden, ein entsprechendes Fahrerassistenzverfahren für ein Fahrzeug bereitzustellen.

Diese Aufgaben werden mittels des jeweiligen Gegenstands der unabhängigen Ansprüche gelöst. Vorteilhafte Ausgestaltungen sind Gegenstand von jeweils abhängigen Unteransprüchen.

Nach einem Aspekt wird ein Fahrerassistenzsystem für ein Fahrzeug bereitgestellt. Das System umfasste eine Bilderfassungseinrichtung, welche eine Fahrspur optisch erfassen kann. Ferner umfasst das Fahrerassistenzsystem eine Anzeigeeinrichtung, welche eine Anzeigefahrspur entsprechend der optisch erfassten Fahrspur anzeigen kann. Des Weiteren ist eine Positionsbestimmungseinrichtung zum Bestimmen einer Fahrzeugposition relativ zu der Fahrspur vorgesehen. Hierbei ist die Anzeigeeinrichtung ferner eingerichtet, die Fahrzeugposition relativ zu der angezeigten Anzeigefahrspur anzuzeigen.

Gemäß einem weiteren Aspekt der Erfindung wird ein Fahrerassistenzverfahren für ein Fahrzeug bereitgestellt, wobei in einem ersten Schritt eine Fahrspur optisch erfasst wird. Entsprechend der optisch erfassten Fahrspur wird eine Anzeigefahrspur angezeigt. Es wird ferner eine Fahrzeugposition bestimmt und diese Fahrzeugposition relativ zu der angezeigten Anzeigefahrspur angezeigt.

Nach einem weiteren Aspekt wird ein Fahrzeug mit einem Fahrerassistenzsystem bereitgestellt, welches zur Ausführung des erfindungsgemäßen Fahrerassistenzverfahrens geeignet ist. Insbesondere kann es sich hierbei um das erfindungsgemäße Fahrerassistenzsystem handeln.

Die Erfindung umfasst also den Gedanken, eine Fahrspur optisch zu erfassen. Basierend auf dieser optisch erfassten Fahrspur wird dann eine Anzeigefahrspur einem Fahrer angezeigt. Bei der Anzeigefahrspur kann es sich beispielsweise um die optisch erfasste Fahrspur handeln, also insbesondere um ein Live-Bild der Fahrspur. Es kann aber insbesondere auch ein Modell einer Fahrspur, welches auch als eine Modellfahrspur bezeichnet werden kann, entsprechend der optisch erfassten Fahrspur angezeigt werden. In der Modellfahrspur können dann insbesondere Elemente aus der realen Fahrspur angezeigt werden wie beispielsweise Fahrspurbegrenzungsmarkierungen, Fahrspurbegrenzungspfosten, Leitplanken und/oder Hinweisschilder. Diese Elemente können insbesondere als Modell oder als reales Bild angezeigt werden.

Es wird weiterhin eine Fahrzeugposition bestimmt, wobei dann die Fahrzeugposition in Bezug zu der angezeigten Anzeigefahrspur gemeinsam mit der Anzeigefahrspur dem Fahrer angezeigt wird. Insbesondere werden die einzelnen Verfahrensschritte kontinuierlich durchgeführt, so dass der Fahrer in vorteilhafter Weise quasi in Echtzeit sehen kann, wo sich sein Fahrzeug in der Fahrspur befindet und wie es sich relativ zu der Fahrspur bewegt.

Der Fahrer kann so unmittelbar in vorteilhafter Weise sofort erkennen, wo sich sein Fahrzeug in Bezug zu der Fahrspur befindet. Er kann also beispielsweise erkennen, ob sich sein Fahrzeug zentriert oder seitlich einer Mittellinie der Fahrspur befindet. Insbesondere kann der Fahrer in vorteilhafter Weise auch erkennen, wenn sich sein Fahrzeug Fahrspurbegrenzungsmarkierungen nähert. Insbesondere kann der Fahrer in vorteilhafter Weise auch erkennen, wenn sich sein Fahrzeug nicht mehr innerhalb der Fahrspur befindet. Dadurch, dass der Fahrer in die Lage versetzt wird, eine Abweichung des Fahrzeugs von einer optimalen Fahrspurfahrzeugposition in der Fahrspur unmittelbar und einfach zu erkennen, kann er entsprechend geeignete der jeweiligen Fahrsituation konkret angepasste Gegenmaßnahmen ergreifen, wobei eine optimale Fahrspurfahrzeugposition insbesondere einer in der Fahrspur zentrierten Fahrzeugposition entspricht. So muss der Fahrer in der Regel bei einer kleinen Abweichung von der optimalen Position nur eine relativ kleine Gegenlenkung vornehmen, bei einer größeren Abweichung hingegen in der Regel auch eine größere Abweichung. Wenn der Fahrer aber bei einer kleinen Abweichung eine relativ große Gegenlenkung vornimmt, so wird das Fahrzeug dadurch über die optimale Fahrspurfahrzeugposition hinaus ausgelenkt, was den Fahrer und gegebenenfalls weitere Verkehrsteilnehmer gefährden kann. Mittels der Erfindung weiß der Fahrer aber, in welchem Umfang sein Fahrzeug von der optimalen Position entfernt ist, so dass er zu große oder zu kleine Gegenlenkungen nicht vornehmen wird. Die Sicherheit für den Fahrer und gegebenenfalls weiteren Verkehrsteilnehmern wird insofern in vorteilhafter Weise erheblich erhöht.

Nach einer Ausführungsform ist die Positionsbestimmungseinrichtung eingerichtet, die Fahrzeugposition basierend auf der optisch erfassten Fahrspur zu bestimmen. Die Fahrzeugposition wird also basierend auf der optisch erfassten Fahrspur bestimmt. Das heißt insbesondere, dass mittels von der Bilderfassungseinrichtung bereitgestellten der Fahrspur entsprechenden Signalen die Fahrzeugposition bestimmt wird. Die Signale können insbesondere Bild- und/oder Videosignale umfassen.

Erfindungsgemäss ist die Bilderfassungseinrichtung eine Videokamera, eine Rückfahrvideokamera. Eine solche Rückfahrvideokamera ist insbesondere in einem Heckbereich des Fahrzeugs angeordnet und erfasst in rückwärtiger Richtung die Fahrspur. Es kann also insbesondere ein mittels der Videokamera bereitgestellter Videostrom ausgewertet werden, um die Fahrzeugposition relativ zu der Fahrspur zu bestimmen. Ein Videostrom umfasst insbesondere Videosignale. Es wird insbesondere ein Live-Bild oder Live-Video der Fahrspur angezeigt.

Gemäß einer weiteren Ausführungsform wird zumindest eine Fahrspurbegrenzungsmarkierung detektiert und relativ zum Fahrzeug vermessen. Daraus kann dann in vorteilhafter Weise insbesondere eine laterale Lage bzw. Position des Fahrzeugs in der Fahrspur berechnet werden. Eine entsprechende Positionsbestimmung ist somit in vorteilhafter Weise besonders genau.

In einer weiteren Ausführungsform umfasst die Positionsbestimmungseinrichtung ein Navigationssystem. Beispielsweise kann ein solches Navigationssystem in der Positionsbestimmungseinrichtung integriert sein. Es kann aber auch vorgesehen sein, dass die Positionsbestimmungseinrichtung mit einem externen Navigationssystem verbunden ist. Das Navigationssystem stellt insbesondere der Positionsbestimmungseinrichtung eine Fahrzeugposition basierend auf den mittels des Navigationssystems durchgeführten Messungen bzw. Berechnungen bereit. Diese Fahrzeugposition kann insbesondere auch als eine Navigationssystemposition bezeichnet werden. Es kann insbesondere vorgesehen sein, dass die Navigationssystemposition mit einer mittels des ausgewerteten Videostroms berechneten Fahrzeugposition verglichen bzw. abgeglichen wird. Bei einer zu großen Abweichung kann vorgesehen sein, dass die Positionsbestimmung wiederholt wird.

In einer weiteren Ausführungsform wird ein Fahrzeugmodell entsprechend der Fahrzeugposition relativ zu der angezeigten Anzeigefahrspur angezeigt. Hierbei kann das Fahrzeugmodell dem realen Fahrzeug entsprechen. Das Fahrzeugmodell kann zusätzlich mit einer Fahrzeugmittellinie angezeigt werden. Das Fahrzeugmodell kann weiterhin vorzugsweise mit Fahrzeugbegrenzungslinien dargestellt werden.

Die Erfindung wird im Folgenden anhand von bevorzugten Ausführungsbeispielen unter Bezugnahme auf Figuren näher erläutert. Hierbei zeigen
Fig. 1 ein Fahrerassistenzsystem,
Fig. 2 ein Ablaufdiagramm eines Fahrerassistenzverfahrens,
Fig. 3 ein Fahrzeug mit einem Fahrerassistenzsystem,
Fig. 4 ein weiteres Fahrzeug mit einem Fahrerassistenzsystem in einer Fahrspur,
Fig. 5 ein Blockdiagramm für eine schematische Darstellung der Funktionsweise einer Ausführungsform eines Fahrerassistenzverfahrens und
Fig. 6 drei verschiedene Darstellungen eines Fahrzeugmodells in einer Anzeigeeinrichtung entsprechend der Fahrzeugposition relativ zu einer angezeigten Anzeigefahrspur.

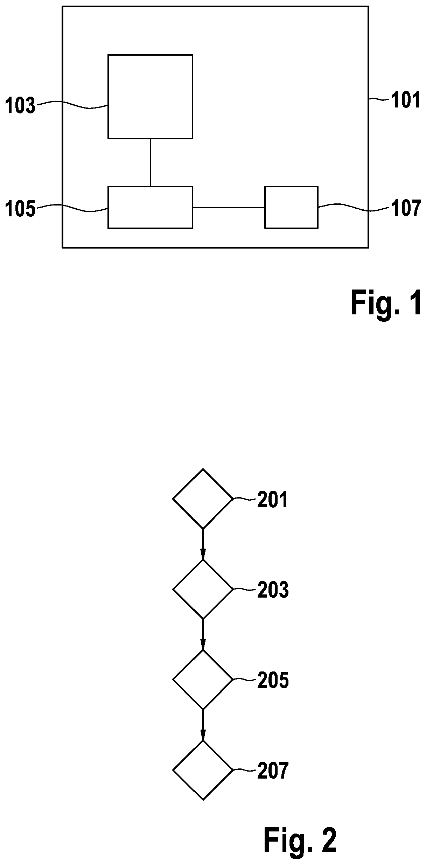

Fig. 1 zeigt ein Fahrerassistenzsystem 101 für ein Fahrzeug (nicht gezeigt). Das System 101 umfasst eine Bilderfassungseinrichtung 103 zum optischen Erfassen einer Fahrspur (nicht gezeigt). Das Fahrerassistenzsystem 101 umfasst ferner eine Anzeigeeinrichtung 105. Mittels der Anzeigeeinrichtung 105 ist es insbesondere ermöglicht, eine Anzeigefahrspur entsprechend der mittels der Bilderfassungseinrichtung 103 optisch erfassten Fahrspur anzuzeigen. Bei der Anzeigefahrspur kann es sich beispielsweise um ein Modell einer Fahrspur handeln. Es kann aber vorzugsweise auch vorgesehen sein, dass die optisch erfasste Fahrspur live, d.h. direkt, angezeigt wird. In einer Ausführungsform kann auch vorgesehen sein, dass die erfasste Fahrspur transformiert wird, beispielsweise in eine Draufsichtperspektive.

Das Fahrerassistenzsystem 101 weist ferner eine Positionsbestimmungseinrichtung 107 auf, welche eine Fahrzeugposition relativ zu der Fahrspur bestimmen kann. Die so bestimmte Fahrzeugposition wird dann auf der Anzeigeeinrichtung in Relation zu der angezeigten Anzeigefahrspur gemeinsam mit der Anzeigefahrspur angezeigt, sodass der Fahrer in vorteilhafter Weise die Position seines Fahrzeugs relativ zu der Fahrspur unmittelbar angezeigt bekommt.

Ein solches Fahrerassistenzsystem ist insbesondere in vorteilhafter Weise geeignet, die Sicherheit beim Befahren von engen Straßen beträchtlich zu erhöhen, da ein geringfügiges Verlassen der Fahrspur dazu führen kann, dass der Fahrer mit Fahrzeugen in benachbarten Fahrspuren oder mit Begrenzungsmauern kollidiert. Ein Fahrerassistenzsystem im Sinne der vorliegenden Erfindung kann insofern auch als ein Engstellenassistenzsystem bezeichnet werden.

Fig. 2 zeigt ein Ablaufdiagramm eines Fahrerassistenzverfahrens für ein Fahrzeug. In einem Schritt 201 wird eine Fahrspur optisch erfasst. Die so erfasste Fahrspur wird in einem Schritt 203 verwendet, um eine Anzeigefahrspur zu bilden, welche dann angezeigt wird. In einem Schritt 205 wird eine Fahrzeugposition relativ zu der Fahrspur bestimmt, wobei die Fahrzeugposition in einem Schritt 207 relativ zu der angezeigten Anzeigefahrspur angezeigt wird. Es werden also sowohl die Anzeigefahrspur als auch die Fahrzeugposition gleichzeitig angezeigt, wobei die Fahrzeugposition relativ zu der angezeigten Anzeigefahrspur angezeigt wird.

Basierend auf der Fahrzeugposition relativ zu der Fahrspur kann insbesondere vorgesehen sein, dem Fahrer einen Hinweis bereitzustellen, wie er insbesondere mittels Lenken sein Fahrzeug wieder in die Spur, beispielsweise zentriert in die Spur, bringen kann. Ein solcher Hinweis kann beispielsweise einen Lenkhinweis umfassen. Ein Hinweis kann beispielsweise auch eine gemeinsame Darstellung einer Mittellinie der Fahrspur und des eigenen Fahrzeugs mit einem Aufforderungshinweis, die beiden Linien zur Deckung zu bringen, umfassen.

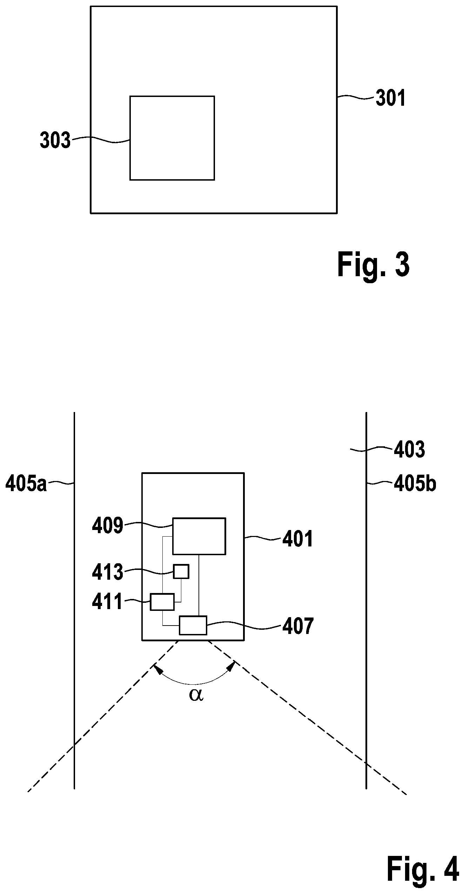

Fig. 3 zeigt ein Fahrzeug 301 umfassend ein Fahrerassistenzsystem 303. Bei dem Fahrerassistenzsystem 303 kann es sich beispielsweise um das Fahrerassistenzsystem 101 in Fig. 1 handeln. Gemäß einer nicht gezeigten Ausführungsform ist beispielsweise die Bilderfassungseinrichtung 103 in einem Heckbereich des Fahrzeugs 301 derart angeordnet, dass die Bilderfassungseinrichtung 103 in rückwärtiger Richtung bezogen auf das Fahrzeug 301 die Fahrspur optisch erfassen kann. Rückwärts im Sinne der vorliegenden Erfindung bezeichnet insbesondere die Richtung, in welche das Fahrzeug 301 fahren würde, wenn ein Rückwärtsgang eingelegt wäre.

Fig. 4 zeigt ein weiteres Fahrzeug 401 in einer Fahrspur 403. Die Fahrspur 403 wird mittels zweier Fahrspurbegrenzungsmarkierungen 405a und 405b in Form von durchzogenen Linien gebildet bzw. definiert.

In einem Heckbereich des Fahrzeugs 401 ist eine Videokamera 407 derart angeordnet, dass die Videokamera 407 über einen abhängig von einem nicht gezeigten Linsensystem der Videokamera 407 gebildeten Öffnungswinkel α die Fahrspur 403 in rückwärtiger Richtung bezogen auf das Fahrzeug 401 optisch erfassen kann. Da die Videokamera 407 die Fahrspur 403 in rückwärtiger Richtung optisch erfasst, kann die Videokamera 407 auch als eine Rückfahrvideokamera bezeichnet werden. Die mittels der Rückfahrvideokamera 407 erfasste Fahrspur 403 kann dann insbesondere live auf einer Anzeigeeinrichtung 409 angezeigt werden. Hierbei kann in einer nicht gezeigten Ausführungsform vorgesehen sein, dass die aufgenommenen Videobilder der Fahrspur 403 transformiert werden, beispielsweise in eine Draufsichtperspektive.

Ferner ist in dem Fahrzeug 401 eine Positionsbestimmungseinrichtung 411 vorgesehen, welche basierend auf den Videosignalen bzw. dem Videostrom der Rückfahrvideokamera 407 eine Fahrzeugposition relativ zu der Fahrspur 403, dass heißt insbesondere zu den beiden Fahrspurbegrenzungsmarkierungen 405a und 405b, bestimmen kann. Die Fahrzeugposition wird dann der Anzeigeeinrichtung 409 zur Verfügung gestellt, so dass die Anzeigeeinrichtung 409 die Fahrzeugposition relativ zu der angezeigten Anzeigefahrspur anzeigen bzw. darstellen kann. Hierbei kann insbesondere vorgesehen sein, dass auf der angezeigten Anzeigefahrspur entsprechend der Fahrzeugposition ein Fahrzeugmodell eingeblendet wird. Insbesondere wird dieses Modell positions-, und/oder skalierungs-, und/oder rotationsangepasst in die angezeigte Anzeigefahrspur eingeblendet.

In dem in Fig. 4 gezeigten Ausführungsbeispiel ist ferner optional ein Navigationssystem 413 in dem Fahrzeug 401 vorgesehen, wobei die mittels des Navigationssystems 413 ermittelte Fahrzeugposition der Positionsbestimmungseinrichtung 411 zur Verfügung gestellt werden kann. Diese Fahrzeugposition kann im Folgenden auch als eine Navigationssystemposition bezeichnet werden. Die Positionsbestimmungseinrichtung 411 kann nun entscheiden, ob sie beispielsweise die Fahrzeugposition oder die Navigationssystemposition der Anzeigeeinrichtung 409 zur Verfügung stellt oder ob sie insbesondere die Navigationssystemposition lediglich als Abgleich für die mittels des Videodatenstroms ermittelte Fahrzeugposition verwendet. In einem weiteren nicht gezeigten Ausführungsbeispiel kann auch auf ein solches Navigationssystem 413 verzichtet werden.

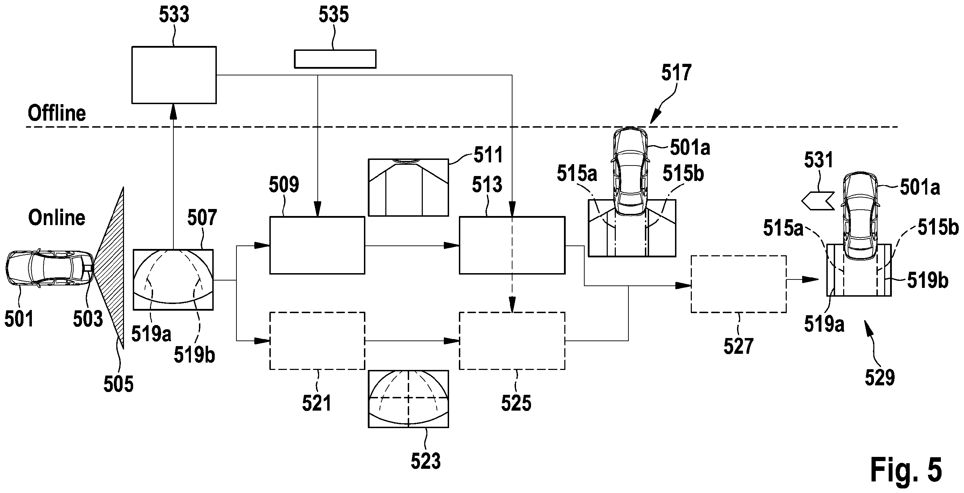

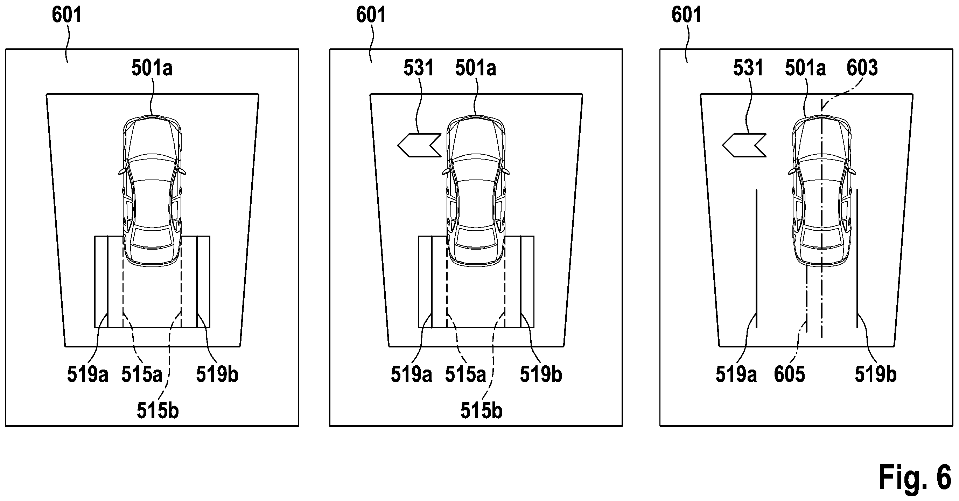

Fig. 5 zeigt ein Blockdiagramm zur Darstellung der Funktionsweise einer Ausführungsform eines Fahrerassistenzverfahrens für ein Fahrzeug 501. Das Fahrzeug 501 umfasst ein Fahrerassistenzsystem, wobei der Übersicht halber nur eine Rückfahrvideokamera 503 gezeigt ist. Die Rückfahrvideokamera 503 befindet sich in einem Heckbereich des Fahrzeugs und kann insofern in rückwärtiger Richtung eine Fahrspur optisch erfassen. Dieses optische Erfassen ist in Fig. 5 mittels eines Dreiecks mit dem Bezugszeichen 505 schematisch dargestellt. Das mittels der Rückfahrkamera 503 aufgenommene Bild 507 der Fahrspur wird insbesondere in einem Schritt 509 in geeigneter Weise transformiert. Beispielsweise wird das Bild 507 in eine Draufsichtperspektive transformiert. Das transformierte Bild ist hier mit dem Bezugszeichen 511 bezeichnet. An dieser Stelle sei angemerkt, dass die in Bezug mit der in Fig. 5 und 6 gemachten Ausführungen beschriebenen Bilder insbesondere auf der Anzeigeeinrichtung des Fahrerassistenzsystems angezeigt werden.

In einem Schritt 513 wird positions-, skalierungs- und/oder rotationsangepasst ein Modell 501a des Fahrzeugs 501 mit seinen seitlichen Begrenzungslinien 515a, 515b in das transformierte Bild 511 eingeblendet. Das daraus resultierende Bild ist hier mit dem Bezugszeichen 517 gekennzeichnet. Allein die mittels des Bildes 517 gezeigte Darstellung hilft bereits in vorteilhafter Weise dem Fahrer, sein Fahrzeug wieder in der Spur zu zentrieren, da er eine Abweichung von einer optimalen Position unmittelbar und eindeutig und einfach erkennen kann.

In einer weiteren optionalen Ausführungsform können mittels Videoverarbeitung aus dem Videostrom der Rückfahrvideokamera 503 Fahrspurbegrenzungslinien 519a und 519b detektiert (Schritt 521) und in Bezug auf das Fahrzeug 501 vermessen werden, was als Bild 523 angezeigt werden kann. Daraus kann dann in vorteilhafter Weise eine laterale Lage des Fahrzeugs 501 in der Fahrspur berechnet werden (Schritt 525).

In einem Schritt 527 kann weiterhin vorgesehen sein, einen Lenkhinweis 531 zu berechnen und gemäß dem Bild 529 anzuzeigen. Der Lenkhinweis 531 ist hier beispielhaft als ein Pfeil dargestellt.

In weiteren nicht gezeigten Ausführungsformen kann auch vorgesehen sein, einen solchen Lenkhinweis auf einem Zentraldisplay und/oder einem Head-Up-Display darzustellen. Insbesondere kann auch ein Lenkradmoment gebildet werden, welches dem Fahrer haptisch anzeigt, in welcher Richtung er zu lenken hat, um das Fahrzeug 501 wieder zentriert in die Spur zu bringen. Insbesondere kann auch eine gemeinsame Darstellung einer Mittellinie der Fahrspur und des eigenen Fahrzeugs vorgesehen sein mit einer Aufforderung an den Fahrer, die beiden Linien zur Deckung zu bringen.

Es kann ferner beispielsweise vorgesehen sein, dass die Rückfahrvideokamera 503 kalibriert wird. Insbesondere wird diese Kalibrierung mit intrinsischen und extrinsischen Parametern durchgeführt. Die Kalibrierung kann vorzugsweise offline und/oder online durchgeführt werden. Offline bedeutet hier insbesondere, dass die Kalibrierung vor einer Fahrt durchgeführt wird. Online bedeutet hier insbesondere, dass eine solche Kalibrierung im laufenden Betrieb, d.h. während einer Fahrt, durchgeführt wird. Insbesondere findet die Kalibrierung typischerweise nur einmal im Offline-Modus statt. Vorzugsweise kann sie aber auch im laufenden Betrieb online kalibriert werden, insbesondere kann die Rückfahrvideokamera 503 mehrmals online kalibriert werden. Dieser Kalibrierungsschritt wird mit dem Bezugszeichen 533 gekennzeichnet. Die aus der Kalibrierung ermittelten Parameter 535 der Rückfahrvideokamera 503 können dann insbesondere für den Bildtransformationsschritt 509 und/oder für den Schritt 513 verwendet werden.

Fig. 6 zeigt drei beispielhafte Darstellungsmöglichkeiten für das Modellfahrzeug 501 a in der angezeigten Anzeigefahrspur. Die entsprechenden Darstellungen werden mittels einer Anzeigeeinrichtung 601 angezeigt.

In der linken Anzeigeeinrichtung 601 ist das Fahrzeug 501 dargestellt mit seinen Begrenzungslinien 515a und 515b in Bezug zu den Fahrspurbegrenzungsmarkierungen 519a, 519b.

In der mittleren Anzeigeeinrichtung 601 ist das Fahrzeugmodell 501a mit seinen Begrenzungslinien 515a, 515b in Bezug zu den Fahrspurbegrenzungsmarkierungen 519a, 519b dargestellt, wobei zusätzlich im Vergleich zur linken Anzeigeeinrichtung 601 in Fig. 6 noch ein Lenkhinweis 531 in Form eines Pfeils dargestellt wird.

Die rechte Anzeigeeinrichtung 601 in Fig. 6 zeigt ebenfalls das Fahrzeugmodell 501a mit seiner Mittellinie 603, wobei weiterhin eine Fahrspurmittellinie 605 dargestellt ist. Auch hier ist ein Lenkhinweis 531 mittels eines Pfeils dargestellt. Eine optimale Fahrspurfahrzeugposition wäre hier beispielsweise erreicht, wenn die Fahrspurmittellinie 605 in Deckung mit der Mittellinie 603 des Fahrzeugs gebracht wird.

Zusammenfassend umfasst die Erfindung also insbesondere den Gedanken, einen Videostrom einer Rückfahrkamera darzustellen und zu vermessen, um eine Fahrzeugposition relativ zu der Fahrspur zu bestimmen. Dem Fahrer wird dadurch insbesondere angezeigt, wie sein Fahrzeug zur Zeit in der Fahrspur lokalisiert ist, so dass ihm insbesondere ein Hinweis gegeben werden kann, in welche Richtung er sein Fahrzeug lenken muss, um möglichst optimal, d.h. insbesondere zentriert, in der Spur zu fahren. Das Fahrerassistenzsystem und das Fahrerassistenzverfahren können insbesondere in vorteilhafter Weise beim Befahren von engen Straßen verwendet werden. Weiterhin ist das Fahrerassistenzsystem insbesondere kostengünstig und einfach herzustellen.

## Patentansprüche

1. Fahrerassistenzsystem (101) für ein Fahrzeug (401), mit:
- einer Bilderfassungseinrichtung (103) zum optischen Erfassen einer Fahrspur (403), wobei die Bilderfassungseinrichtung (103) eine Rückfahrvideokamera (407) zum Erfassen der Fahrspur (403) in rückwärtiger Richtung bezogen auf das Fahrzeug (401) ist,
- einer Anzeigeeinrichtung (409) zum Anzeigen einer Anzeigefahrspur entsprechend der optisch in rückwärtiger Richtung erfassten Fahrspur (403)
- und einer Positionsbestimmungseinrichtung (411) zum Bestimmen einer Fahrzeugposition relativ zu der Fahrspur (403),
- wobei die Anzeigeeinrichtung (409) ferner eingerichtet ist, die Fahrzeugposition relativ zu der angezeigten Anzeigefahrspur anzuzeigen.

2. Fahrerassistenzsystem (101) nach Anspruch 1, wobei die Positionsbestimmungseinrichtung (411) eingerichtet ist, die Fahrzeugposition basierend auf der optisch erfassten Fahrspur (403) zu bestimmen.

3. Fahrerassistenzsystem (101) nach Anspruch 1 oder 2, wobei die Positionsbestimmungseinrichtung (411) ein Navigationssystem (411) umfasst.

4. Fahrerassistenzverfahren für ein Fahrzeug (401), umfassend die folgenden Schritte:
- optisches Erfassen einer Fahrspur (403), wobei die Fahrspur (403) in rückwärtiger Richtung bezogen auf das Fahrzeug (401) optisch erfasst wird,
- Anzeigen einer Anzeigefahrspur entsprechend der optisch in rückwärtiger Richtung erfassten Fahrspur (403),
- Bestimmen einer Fahrzeugposition relativ zu der Fahrspur (403) und
- Anzeigen der Fahrzeugposition relativ zu der angezeigten Anzeigefahrspur.

5. Fahrerassistenzverfahren nach Anspruch 4, wobei die Fahrzeugposition basierend auf der optisch erfassten Fahrspur (403) bestimmt wird.

6. Fahrerassistenzverfahren nach Anspruch 5, wobei zumindest eine Fahrspurbegrenzungsmarkierung (405a, 405b) detektiert und relativ zum Fahrzeug (401) vermessen wird.

7. Fahrerassistenzverfahren nach einem der Ansprüche 4 bis 6, wobei ein Fahrzeugmodell (501 a) entsprechend der Fahrzeugposition relativ zu der angezeigten Anzeigefahrspur angezeigt wird.

8. Fahrzeug mit einem Fahrerassistenzsystem nach einem der Ansprüche 1 bis 3.

## Claims

1. Driver assistance system (101) for a vehicle (401), comprising:
- an image capturing device (103) for optically capturing a lane (403), wherein the image capturing device (103) is a reversing video camera (407) for capturing the lane (403) in the rearwards direction with respect to the vehicle (401),
- a display device (409) for displaying a display lane corresponding to the lane (403) which is optically captured in the rearwards direction,
- and a position determination device (411) for determining a vehicle position relative to the lane (403),
- wherein the display device (409) is furthermore adapted to display the vehicle position relative to the displayed display lane.

2. Driver assistance system (101) according to Claim 1, wherein the position determination device (411) is adapted to determine the vehicle position based on the optically captured lane (403).

3. Driver assistance system (101) according to Claim 1 or 2, wherein the position determination device (411) comprises a navigation system (411).

4. Driver assistance method for a vehicle (401), comprising the steps of:
- optically capturing a lane (403), wherein the lane (403) is optically captured in the rearwards direction with respect to the vehicle (401),
- displaying a display lane corresponding to the lane (403) which is optically captured in the rearwards direction,
- determining a vehicle position relative to the lane (403), and
- displaying the vehicle position relative to the displayed display lane.

5. Driver assistance method according to claim 4, wherein the vehicle position is determined based on the optically captured lane (403).

6. Driver assistance method according to Claim 5, wherein at least one lane delimitation marking (405a, 405b) is detected and measured relative to the vehicle (401).

7. Driver assistance method according to one of Claims 4 to 6, wherein a vehicle model (501a) corresponding to the vehicle position relative to the displayed display lane is displayed.

8. Vehicle having a driver assistance system according to one of Claims 1 to 3.

## Revendications

1. Système d'assistance au conducteur (101) pour un véhicule (401), comprenant :
- un dispositif d'acquisition d'images (103) destiné à l'acquisition optique d'une voie de circulation (403), le dispositif d'acquisition d'images (103) étant une caméra vidéo de marche arrière (407) destinée à acquérir la voie de circulation (403) dans la direction de la marche arrière par rapport au véhicule (401),
- un dispositif d'affichage (409) destiné à afficher une voie de circulation d'affichage correspondant à la voie de circulation (403) acquise optiquement dans la direction de la marche arrière,
- et un dispositif de détermination de la position (411) destiné à déterminer une position du véhicule par rapport à la voie de circulation (403),
- le dispositif d'affichage (409) étant en outre conçu pour afficher la position du véhicule par rapport à la voie de circulation d'affichage affichée.

2. Système d'assistance au conducteur (101) selon la revendication 1, le dispositif de détermination de la position (411) étant conçu pour déterminer la position du véhicule en se basant sur la voie de circulation (403) acquise optiquement.

3. Système d'assistance au conducteur (101) selon la revendication 1 ou 2, le dispositif de détermination de la position (411) comprenant un système de navigation (411).

4. Procédé d'assistance au conducteur pour un véhicule (401), comprenant les étapes suivantes :
- acquisition optique d'une voie de circulation (403), la voie de circulation (403) étant acquise optiquement dans la direction de la marche arrière par rapport au véhicule (401),
- affichage d'une voie de circulation d'affichage correspondant à la voie de circulation (403) acquise optiquement dans la direction de la marche arrière,
- détermination d'une position du véhicule par rapport à la voie de circulation (403) et
- affichage de la position du véhicule par rapport à la voie de circulation d'affichage affichée.

5. Procédé d'assistance au conducteur selon la revendication 4, la position du véhicule étant déterminée en se basant sur la voie de circulation (403) acquise optiquement.

6. Procédé d'assistance au conducteur selon la revendication 5, au moins un marquage de délimitation de la voie de circulation (405a, 405b) étant détecté et mesuré par rapport au véhicule (401).

7. Procédé d'assistance au conducteur selon l'une des revendications 4 à 6, un modèle de véhicule (501a) correspondant à la position du véhicule par rapport à la voie de circulation d'affichage affichée étant affiché.

8. Véhicule équipe d'un système d'assistance au conducteur selon l'une des revendications 1 à 3.
